# EUROPEAN PATENT APPLICATION

(11) **EP 4 556 629 A1**
(43) Date of publication of application: **21.05.2025**
(21) Application number: 24207747.7
(22) Date of filing: 21.10.2024
(51) Int. Cl.: E01C 19/48

(54) **ASPHALT FINISHER**

(30) Priority: 14.11.2023 JP 2023193395
(71) Applicant: Sumitomo (S.H.I.) Construction Machinery Co., Ltd., Shinagawa-ku Tokyo 141-6025 (JP)
(72) Inventor: TERAMOTO, Tota, Chiba, 263-0001, (JP); ITOH, Takumi, Chiba, 263-0001, (JP)
(74) Representative: Louis Pöhlau Lohrentz

(57) **Abstract**

There is provided an asphalt finisher (100) that allows an operator to easily know a situation of an application range of a paving material. An asphalt finisher (100) includes a tractor (1), a hopper (2) that is installed on a front side of the tractor (1), a conveyor (CV) that transports the paving material in the hopper (2) to a rear side of the tractor (1), a screw (SC) that spreads the paving material, which is transported by the conveyor (CV) and is sprinkled on a road surface, in a vehicle width direction, a screed (3) that levels the paving material spread by the screw (SC) on a rear side of the screw (SC), and a detection unit that detects an application range of the paving material, in which the asphalt finisher (100) is configured to perform a process of outputting information regarding a state of a person detected by the detection unit.

## Description

### BACKGROUND OF THE INVENTION

### Field of the Invention

The present invention relates to an asphalt finisher.

### Description of Related Art

In the related art, there is known an asphalt finisher including a tractor, a hopper that is installed on a front side of the tractor and receives a paving material, a conveyor that transports the paving material in the hopper to a rear side of the tractor, a screw that spreads the paving material, which is transported by the conveyor and is sprinkled on a road surface, in a vehicle width direction on the rear side of the tractor, and a screed that levels the paving material spread by the screw on a rear side of the screw.

For example, Japanese Unexamined Patent Publication No. 2014-105434 discloses a paving machine that includes a hopper provided at a front portion of a vehicle body and a conveyor that transports a paving material accommodated in the hopper to a rear side of the vehicle body, and that has a conveyor entanglement prevention function of prohibiting an operation of the conveyor when a person is detected inside the hopper.

### SUMMARY OF THE INVENTION

However, the invention disclosed in Japanese Unexamined Patent Publication No. 2014-105434 detects only a person inside the hopper and does not detect a person who is present in the periphery of the vehicle body.

An object of one aspect of the present invention is to provide an asphalt finisher that allows an operator to easily know a situation of an application range of a paving material.

An asphalt finisher according to one aspect of the present invention includes a tractor, a hopper that is installed on a front side of the tractor and receives a paving material, a conveyor that transports the paving material in the hopper to a rear side of the tractor, a screw that spreads the paving material, which is transported by the conveyor and is sprinkled on a road surface, in a vehicle width direction on the rear side of the tractor, a screed that levels the paving material spread by the screw on a rear side of the screw, and a detection unit that detects an application range of the paving material, in which the asphalt finisher is configured to perform a process of outputting information regarding a state of a person detected by the detection unit.

According to one aspect of the present invention, it is possible to easily know the situation of the application range of the paving material.

### BRIEF DESCRIPTION OF THE DRAWINGS

Fig. 1 is a schematic diagram showing an example of an overall configuration of a road surface paving system according to an embodiment.
Fig. 2 is a side view showing an example of an asphalt finisher according to the embodiment.
Fig. 3 is a top view showing an example of the asphalt finisher according to the embodiment.
Fig. 4 is a rear view showing an example of the asphalt finisher according to the embodiment.
Fig. 5 is a block diagram showing an example of a controller of the asphalt finisher according to the embodiment and equipment connected to the controller.
Fig. 6 is a diagram showing an example of detection information displayed on a display unit of the asphalt finisher according to the embodiment.
Fig. 7 is a flowchart showing an example of a detection process executed by the asphalt finisher according to the embodiment.

### DETAILED DESCRIPTION OF THE INVENTION

Hereinafter, an embodiment of the present invention will be described with reference to the drawings. In addition, the embodiment described below is not intended to limit the invention, and is merely an example, and all the features described in the embodiment and combinations thereof are not necessarily essential to the invention. In each drawing, identical or corresponding configurations are denoted by identical or corresponding reference numerals, and description thereof may be omitted.

### [Embodiment]

An embodiment of the present invention is a road surface paving system that paves a road surface using an asphalt finisher. The asphalt finisher according to the present embodiment has a function of detecting a state of a person who is present in the periphery of the asphalt finisher.

At a work site where road surface paving and the like are performed, many workers perform work in the periphery of the asphalt finisher. The workers need to change their work location as the asphalt finisher moves. At such a work site, in a case where an abnormality occurs due to the worker falling down or in a case where a worker's attention is not focused on the asphalt finisher, an abnormality may occur, such as the worker coming into contact with an asphalt finisher main body or a screw.

One way to prevent such an abnormality is to provide the asphalt finisher with a function of stopping when a person is detected. However, since the workers usually perform work while paying attention to its operation in the vicinity of the asphalt finisher, the asphalt finisher frequently stops its operation when detecting the worker, which affects the progress of the work. Therefore, the asphalt finisher is required to have a function to stop traveling of a tractor and rotation of the screw in response to a change in a state of a person who is present in the periphery of the asphalt finisher.

### <Overall Configuration of Road Surface Paving System>

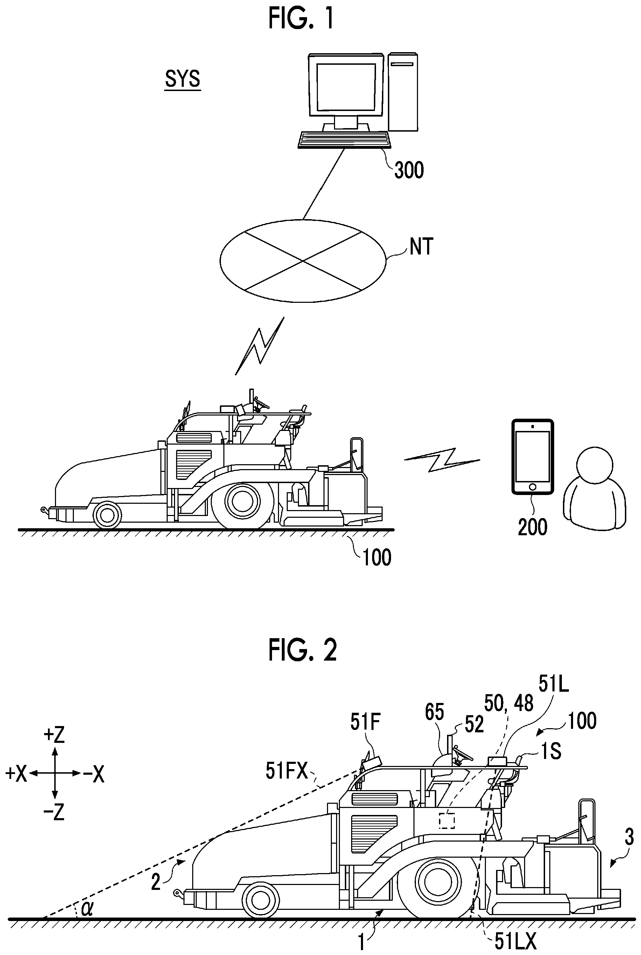

An overall configuration of a road surface paving system SYS according to the embodiment will be described with reference to Fig. 1. Fig. 1 is a schematic diagram showing an example of the overall configuration of the road surface paving system according to the embodiment.

As shown in Fig. 1, the road surface paving system SYS according to the embodiment includes an asphalt finisher 100, a communication terminal 200 (an example of an external device), and a remote management device 300 (an example of an external device). The asphalt finisher 100 and the remote management device 300 are connected via a public network NT.

In addition, the road surface paving system SYS performs various settings related to control of the asphalt finisher 100, for example, in the communication terminal 200 in response to an input from a user or automatically, and transmits the settings to the asphalt finisher 100. In this manner, various operations of the asphalt finisher 100 can be controlled or monitored from the communication terminal 200.

In addition, the asphalt finisher 100 may also transmit information indicating a current situation to any one or more of the communication terminal 200 and the remote management device 300. Furthermore, the asphalt finisher 100 may transmit log information indicating a detection result in the periphery of the asphalt finisher 100 to any one or more of the communication terminal 200 and the remote management device 300.

The remote management device 300 is a terminal provided to remotely manage the work site. The remote management device 300 is operated by a user or the like who remotely manages the work site. For example, the remote management device 300 receives image information indicating the detection result in the periphery of the asphalt finisher 100 from the asphalt finisher 100, and displays the image information on a display unit (liquid crystal panel) (not shown). In addition, the remote management device 300 stores the log information transmitted from the asphalt finisher 100, thereby making it possible to manage the past situation of the work site.

The communication terminal 200 is, for example, a terminal possessed by a user who manages work at a work site or a user who performs work at the work site. The communication terminal 200 receives the image information indicating the detection result in the periphery of the asphalt finisher 100 from the asphalt finisher 100, and displays the image information on the display unit (liquid crystal panel) (not shown). In this manner, the user who manages the work at the work site can recognize the detection result in the periphery of the asphalt finisher 100.

The communication terminal 200 included in the road surface paving system SYS may be a single unit or may be a plurality of units. In this manner, the road surface paving system SYS can provide, via a plurality of the communication terminals 200, information about the asphalt finisher 100 to a plurality of users using the respective communication terminals 200.

The asphalt finisher 100 included in the road surface paving system SYS may be a single unit or may be a plurality of units. In this manner, the road surface paving system SYS can collect data on the asphalt finisher 100, provide information to the user based on the collected data, and set settings related to the control of the asphalt finisher 100.

<Outline of Asphalt Finisher>

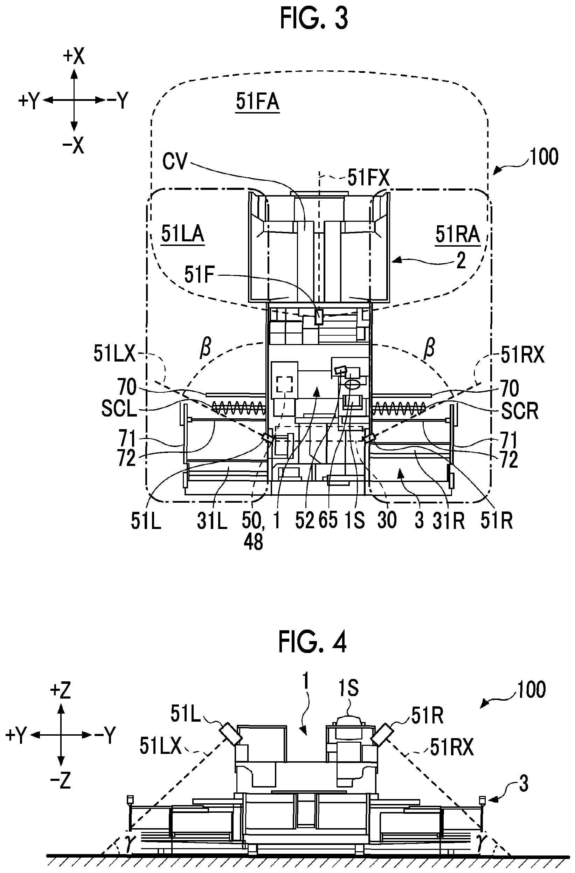

An outline of the asphalt finisher 100 according to the embodiment will be described with reference to Figs. 2 to 4. Fig. 2 is a side view showing an example of the asphalt finisher according to the embodiment. Fig. 3 is a top view showing an example of the asphalt finisher according to the embodiment. Fig. 4 is a rear view showing an example of the asphalt finisher according to the embodiment.

The asphalt finisher 100 is mainly configured of a tractor 1, a hopper 2, and a screed 3.

The tractor 1 is a device for traveling the asphalt finisher 100, and tows the screed 3. In the present embodiment, the tractor 1 moves the asphalt finisher 100 by rotating two or four wheels using a traveling hydraulic motor. The traveling hydraulic motor rotates by receiving hydraulic oil from a hydraulic pump driven by a prime mover such as a diesel engine. A driver's seat 1S and an operation panel 65 are disposed at an upper portion of the tractor 1.

An imaging device 51 (an example of a detection unit) is attached to the tractor 1. The imaging device 51 includes a right camera 51R attached to a right side portion of the tractor 1, a left camera 51L attached to a left side portion of the tractor 1, and a front camera 51F attached to a front portion of the tractor 1. The display unit 52 is installed at a position where easily visible to a driver seated in the driver's seat 1S. In the present embodiment, a direction of the hopper 2 as viewed from the tractor 1 is defined as forward (+X direction), and a direction of the screed 3 as viewed from the tractor 1 is defined as rearward (-X direction). A +Y direction corresponds to a left direction, and a -Y direction corresponds to a right direction.

The hopper 2 is a mechanism for receiving a paving material (for example, an asphalt mixture). The hopper 2 is a device that supplies the paving material in front of the screed 3. In the present embodiment, the hopper 2 is configured to be openable and closable in a vehicle width direction by a hydraulic cylinder. Usually, the asphalt finisher 100 brings the hopper 2 into a fully open state so that the paving material is received from a loading platform of a dump truck. Then, when the amount of the paving material in the hopper 2 decreases, the hopper 2 is closed, and the paving material near an inner wall of the hopper 2 is collected in a central portion of the hopper 2, so that the conveyor CV can transport the paving material to the screed 3.

The conveyor CV is driven by a hydraulic motor that rotates by receiving supply of a hydraulic oil from a hydraulic pump. In the present embodiment, the conveyor CV is configured to send the paving material in the hopper 2 to a rear side of the tractor 1 via a transport passage. The transport passage is a substantially rectangular parallelepiped space formed inside the tractor 1, and has a substantially rectangular inlet that is open into the hopper 2 on a front surface of the tractor 1.

The screw SC is driven by a hydraulic motor that rotates by receiving supply of a hydraulic oil from a hydraulic pump. In the present embodiment, the screw SC includes a central screw, a left screw, and a right screw (not shown). The central screw is installed within a width of the tractor 1. The left screw is connected to a left end of the central screw and is installed to protrude to a left side from the width of the tractor 1. The right screw is connected to a right end of the central screw and is installed to protrude to a right side from the width of the tractor 1.

The screed 3 is a mechanism for leveling the paving material. In the present embodiment, the screed 3 is configured to be lifted and lowered in a vertical direction and to expand and contract in the vehicle width direction by a hydraulic cylinder. In a case where the screed 3 is extended in the vehicle width direction, a width of the screed 3 is larger than the width of the tractor 1. In the present embodiment, the screed 3 includes a main screed 30, a left expansion and contraction screed 31L, and a right expansion and contraction screed 31R. The left expansion and contraction screed 31L and the right expansion and contraction screed 31R are configured to expand and contract in the vehicle width direction (Y axis direction). Then, the left expansion and contraction screed 31L and the right expansion and contraction screed 31R that are capable of expanding and contracting in the vehicle width direction are disposed to be offset from each other in an traveling direction (X axis direction). Therefore, the screed 3 can have a width (length in the vehicle width direction) longer than the width when the left expansion and contraction screed 31L and the right expansion and contraction screed 31R are not offset, and the width can be extended longer in the vehicle width direction, so that a wider newly constructed pavement body can be constructed.

A controller 50 is a control unit that controls the asphalt finisher 100. The controller 50 is, for example, a computer including a central processing unit (CPU), a volatile memory, a non-volatile memory, and the like. The controller 50 is a computer including a CPU and a random access memory (R_AM), and is mounted on the tractor 1. Various functions of the controller 50 are realized, for example, by executing a program stored in an auxiliary storage device 48 via the CPU.

The auxiliary storage device 48 is a device for storing various types of information. In the present embodiment, the auxiliary storage device 48 is a non-volatile memory and is integrated with the controller 50. Note that the auxiliary storage device 48 may be disposed outside the controller 50 as a separate structure from the controller 50.

The imaging device 51 is attached to the tractor 1. The imaging device 51 is configured to acquire information regarding a space around the asphalt finisher 100 and to output the acquired information to the controller 50. The imaging device 51 according to the present embodiment includes the front camera 51F, the left camera 51L, and the right camera 51R. The imaging device 51 may be attached to a position (for example, a rear portion) other than the right side portion, the left side portion, and the front portion of the tractor 1. The imaging device 51 may be equipped with a wide-angle lens or a fisheye lens. The imaging device 51 may be attached to the hopper 2, or may be attached to the screed 3.

The imaging device 51 according to the present embodiment is, for example, a camera including an imaging element such as a charge coupled device (CCD) or a complementary metal-oxide-semiconductor (CMOS). The imaging device 51 need only be a spatial recognition device capable of recognizing a space based on the asphalt finisher 100, and may use, for example, light detection and ranging (LiDAR).

As shown in Figs. 2 and 3, the front camera 51F is attached to an upper end of the front portion of the tractor 1 so that an optical axis 51FX of the front camera 51F extends forward in the traveling direction and forms an angle α with respect to the road surface in a side view. As shown in Figs. 2 to 4, the left camera 51L is attached to an upper end of the left side portion of the tractor 1 so that an optical axis 51LX of the left camera 51L forms an angle β with respect to a left side surface of the tractor 1 in a top view and forms an angle γ with respect to the road surface in a rear view. The right camera 51R is attached in the same manner as the left camera 51L, with the left and right sides reversed.

A region 51FA surrounded by a broken line in Fig. 3 indicates an imaging range of the front camera 51F, a region 51LA surrounded by a one-dot chain line indicates an imaging range of the left camera 51L, and a region 51RA surrounded by a one-dot chain line indicates an imaging range of the right camera 51R. As shown in Fig. 3, the range that can be imaged by the imaging device 51 includes the traveling direction of the tractor 1, the side of the hopper 2, the front of the screed 3, and the front of the operating range of the screw SC.

The imaging device 51 is attached to the asphalt finisher 100 via, for example, a bracket, a stay, or a bar. In the present embodiment, the imaging device 51 is attached to the tractor 1 via an attachment stay. Note that the imaging device 51 may be directly attached to the tractor 1 without using the attachment stay, or may be embedded in the tractor 1.

In the present embodiment, the imaging device 51 outputs an acquired input image to the controller 50. In a case where the imaging device 51 acquires the input image using a fisheye lens or a wide-angle lens, the imaging device 51 may output a corrected input image in which apparent distortion or tilt that occurs when using the lenses is corrected to the controller 50. Alternatively, the input image in which the apparent distortion or tilt is not corrected may be output to the controller 50 as it is. In this case, the apparent distortion or tilt is corrected by the controller 50.

The display unit 52 is a device for displaying various types of information. In the present embodiment, the display unit 52 is a liquid crystal display installed in the operation panel 65, and displays various images output by the controller 50.

A retaining plate 70 is a plate-shaped member for preventing the paving material sent out in the vehicle width direction by the screw SC from being scattered in front of the screw SC in order to appropriately send out the paving material in the vehicle width direction by the screw SC.

A side plate 71 is also attached to a distal end of a mold board 72. The mold board 72 is a member for adjusting the amount of the paving material that stays in front of the left expansion and contraction screed 31L and the right expansion and contraction screed 31R, of the paving material spread by the screw SC, and is configured to expand and contract in the vehicle width direction together with the left expansion and contraction screed 31L and the right expansion and contraction screed 31R.

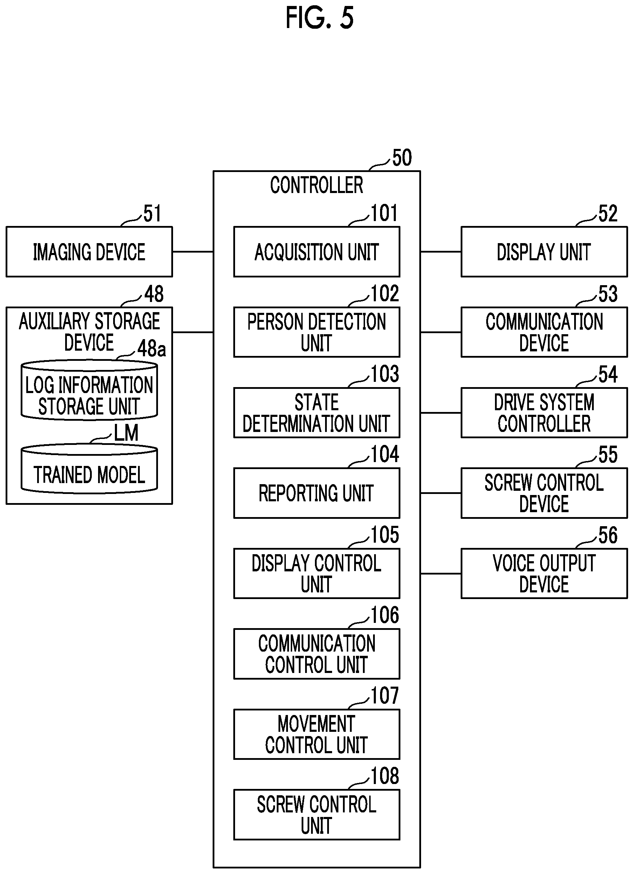

The controller 50 mounted on the asphalt finisher 100 will be described with reference to Fig. 5. Fig. 5 is a block diagram showing an example of a controller of the asphalt finisher according to the embodiment and equipment connected to the controller.

As shown in Fig. 5, the auxiliary storage device 48, the imaging device 51, the display unit 52, a communication device 53, a drive system controller 54, a screw control device 55, and a voice output device 56 are connected to the controller 50.

The auxiliary storage device 48 stores a log information storage unit 48a and a trained model LM. The log information storage unit 48a stores log information that is the detection result in the periphery of the asphalt finisher 100. The log information will be described below. The trained model LM is a machine learning model that is trained to detect a person from the input image. The trained model LM will be described below.

The communication device 53 performs wireless communication with a device that is present in the periphery of the asphalt finisher 100, a server that manages the work site, or the like. For example, the communication device 53 performs wireless communication using any one or more of Wi-Fi (registered trademark), wireless LAN, Bluetooth (registered trademark), and the like as a wireless communication standard.

The drive system controller 54 controls the tractor 1 in accordance with a control command. For example, the drive system controller 54 performs rotation control (speed control) on a rear wheel traveling motor of the tractor 1 and steering angle control on front wheels (an example of drive wheels) of the tractor 1 to follow a steering angle and a speed indicated in the control command.

The screw control device 55 is configured to control a rotation speed of the screw SC. For example, the screw control device 55 is a solenoid valve that controls a flow rate of the hydraulic oil flowing into the hydraulic motor that drives the screw SC. Specifically, the screw control device 55 increases and decreases a flow path area of a pipeline that connects the hydraulic motor that drives the screw SC and the hydraulic pump to each other in accordance with the control command from the controller 50. More specifically, the screw control device 55 increases the flow path area to increase the flow rate of the hydraulic oil flowing into the hydraulic motor that drives the screw SC, thereby increasing the rotation speed of the screw SC. Alternatively, the screw control device 55 reduces the flow path area to decrease the flow rate of the hydraulic oil flowing into the hydraulic motor that drives the screw SC, thereby reducing the rotation speed of the screw SC.

The voice output device 56 is a device that outputs voice toward the periphery of the asphalt finisher 100. For example, the voice output device 56 is a speaker that outputs voice forward of the asphalt finisher 100, and can output an alarm in response to a command from the controller 50. The voice output device 56 may output a voice message.

More specifically, the controller 50 includes an acquisition unit 101, a person detection unit 102, a state determination unit 103, a reporting unit 104, a display control unit 105, a communication control unit 106, a movement control unit 107, and a screw control unit 108 as functional blocks configured by software, hardware, or a combination thereof.

The acquisition unit 101 acquires detection information from various sensors included in the asphalt finisher 100. For example, the acquisition unit 101 acquires the image information captured by the imaging device 51 (the front camera 51F, the left camera 51L, and the right camera 51R).

The person detection unit 102 detects a person who is present in the periphery of the asphalt finisher 100 based on the detection information acquired by the acquisition unit 101. In the present embodiment, the periphery of the asphalt finisher 100 refers to an application range where the paving material is applied within the range that can be imaged by the imaging device 51. In the present embodiment, the application range of the paving material includes, for example, any one or more of an area within a predetermined distance in the traveling direction of the asphalt finisher 100, an area in front of the operating range of the screw SC, an area within a predetermined distance on the side of the screed 3, and an area within a predetermined distance on the side of the hopper 2.

The predetermined distance in the traveling direction of the asphalt finisher 100 is determined according to a traveling speed of the asphalt finisher 100. The predetermined distance in the traveling direction may be, for example, about 5 to 8 meters in front of the asphalt finisher 100. The predetermined distance on the side of the screed 3 is a range within which the left expansion and contraction screed 31L and the right expansion and contraction screed 31R of the screed 3 can be extended. The predetermined distance on the side of the hopper 2 is a range in the vehicle width direction when the hopper 2 is in a fully open state.

The person detection unit 102 detects a person from an input image (the image information captured by the imaging device 51) by simply applying image processing techniques such as shape detection and pattern recognition (template matching).

In addition, the person detection unit 102 detects a person from the input image by applying machine learning in addition to the image processing techniques, for example. Specifically, the person detection unit 102 uses a trained model LM that is trained through machine learning using features of a person shown in the input image to output a rectangular frame (hereinafter, "detection frame") representing a region in which the person is shown, and a label representing a state of the person, from the input image. The label includes, for example, a label indicating that there is no person and a label set for each state of the person. For each state of the person, only one label may be set or a plurality of labels may be set. In addition, in a case where there are a plurality of persons in different states, a single trained model LM may be configured to output a label for each state, that is, to detect all states, or a plurality of trained models LM that can detect only a part of all states may be provided. For example, there is a trained model LM for each type of person, and a label for each trained model LM may be configured to include only a label indicating that a person in a certain state is present and a label indicating that a person in that state is not present.

The trained model LM is generated by applying supervised learning to a base learning model. Specifically, the trained model LM is generated by performing machine learning of the base learning model using a collection of supervised data (supervised data set) that is a combination of images as input and correct answers (detection frames and labels) as output. In addition, the trained model LM may be generated (updated) by additionally training the existing trained model LM using a new supervised data set.

The images included as input in the supervised data set include both images including (showing) a person and images not including (not showing) a person. The images including a person include a plurality of images showing a person at different positions within the range that can be imaged by the imaging device 51, and a plurality of images showing a person in different states. The trained model LM is subjected to machine learning using a supervised data set that includes the images showing a person at different positions, thereby enabling the detection of persons at different positions from the input image. In addition, the trained model LM is subjected to machine learning using a supervised data set that includes the images showing a person in different states, thereby enabling the detection of persons in different states from the input image.

For example, the trained model LM is generated by an external device such as the remote management device 300, and is written to the auxiliary storage device 48 from a predetermined recording medium when manufacturing the asphalt finisher 100. In addition, the trained model LM may be downloaded to the asphalt finisher 100 from an external device such as the remote management device 300 through a predetermined communication line and may be registered in the auxiliary storage device 48. In this manner, the person detection unit 102 can detect a person using the trained model LM registered in the auxiliary storage device 48.

In addition, the trained model LM may be updated by installing update data from a predetermined recording medium into the auxiliary storage device 48. In addition, the trained model LM may be updated by downloading the update data to the asphalt finisher 100 from an external device such as the remote management device 300 through a predetermined communication line and installing the update data in the auxiliary storage device 48. In this manner, the person detection unit 102 can detect a person using the latest updated trained model LM.

For example, the person detection unit 102 detects a person from the input image by using a support vector machine (SVM) that is trained through machine learning using tendencies in image feature amounts of the person shown in the image. In this case, the trained model LM includes a processing unit that extracts image feature amounts from the image information captured by the imaging device 51 as pre-processing. The image feature amount is, for example, a histogram of oriented gradients (HOG) feature amount.

In addition, for example, the person detection unit 102 detects a person from the input image by using machine learning with a deep neural network (DNN), that is, a trained model LM by deep learning. Specifically, the person detection unit 102 detects a person from the input image by using a trained model LM obtained through deep learning using a convolutional neural network (CNN). The CNN is configured by connecting a plurality of combinations of convolution layers that perform convolution processing and pooling layers that perform pooling processing using an activation function, and makes a final determination based on the feature amount (feature map) by a fully connected layer in a final stage. The activation function is, for example, a rectified linear unit (ReLU). In this manner, the trained model LM can handle the input image as it is without requiring any pre-processing.

For example, the person detection unit 102 detects a person by generating regions of candidates for a person from the input image using the trained model LM based on the CNN and classifying these candidates into labels. That is, the trained model LM based on the CNN may be, for example, a classification model that treats the detection of a person from the input image as a classification problem, generates regions of candidates for a person from the image information captured by the imaging device 51, and classifies these candidates into labels. The classification model is, for example, a region-based (R)-CNN or its derivatives (Fast R-CNN, Faster R-CNN, or the like).

In addition, for example, the person detection unit 102 detects a person by simultaneously executing recognition of a person and specification of a position (region) of the person from the input image using the trained model LM based on the CNN. That is, for example, the trained model LM based on the CNN may be, for example, a regression model that treats the detection of a person from the image information captured by the imaging device 51 as a regression problem and simultaneously executes the recognition of a person and the specification of the position (region) from the input image. The regression model is, for example, you only look once (YOLO) or a single shot detector (SSD).

For example, the trained model LM is generated by being trained through machine learning so that the base learning model or the existing trained model LM can detect a monitoring object in different postures.

The state determination unit 103 determines a state of a person detected by the person detection unit 102. In a case where the imaging device 51 is a camera, the state determination unit 103 detects a skeleton of a person through image recognition, and applies a predetermined rule to a shape of the skeleton to determine the state of the person. Specifically, in a case where the shape of the detected skeleton indicates that a position of the knee is higher than a position of the buttocks, the state determination unit 103 can determine that the person has fallen down.

For example, the state determination unit 103 recognizes each part (eye, nose, mouth, ear, or the like) of a face of a person through image recognition, and estimates a line of sight of the person based on a positional relationship between the parts. Then, the state determination unit 103 can determine whether the line of sight of the person is directed toward the asphalt finisher 100.

For example, the state determination unit 103 determines the state of the person by detecting a distance to the person through image analysis. In a case where the imaging device 51 is a LiDAR, the state determination unit 103 detects a distance to each part of the person based on the distance data, and determines the state of the person by applying a predetermined rule to the distance to each part. Specifically, in a case where the distance to each part of the person indicates that the distance to the leg portion is closer than the distance to the head portion, the state determination unit 103 can determine that the person has fallen down.

The state determination unit 103 determines a state of the detected person from the input image by applying machine learning in addition to the image processing techniques, for example. In a case where the person detection unit 102 detects the person and simultaneously detects the state of the person by using the trained model LM, the state determination unit 103 outputs the state detected by using the trained model LM as a determination result of the state of the person.

In the present embodiment, the state determination unit 103 stores the log information, which includes the detection result indicating the person detected from the detection information and the determination result of determining the state of each person, in the log information storage unit 48a. The log information may include the detection information acquired by acquisition unit 101. The log information storage unit 48a accumulates the log information in chronological order based on the date and time when the detection information is acquired.

The reporting unit 104 determines whether a person in a state satisfying a predetermined reporting condition has been detected, based on the determination result of the state determination unit 103. The reporting condition is a condition for determining whether to report that the detected person is in a dangerous state or that is likely to be in a dangerous state. Specifically, the reporting condition includes any one or more of the following: the detected person is not standing upright, the detected person has fallen down, and the line of sight of the detected person is not directed toward the asphalt finisher 100. The state of not standing upright includes, for example, sitting, crouching, kneeling, and crawling on all fours.

In a case where it is determined that a person in a state satisfying the reporting condition has been detected, the reporting unit 104 outputs a signal for reporting that a person in a state satisfying the reporting condition has been detected. For example, the reporting unit 104 outputs, to the display unit 52, a signal for instructing the display unit 52 to display that a person in a state satisfying the reporting condition has been detected. In addition, for example, the reporting unit 104 outputs, to the voice output device 56, a signal for instructing the voice output device 56 to emit a sound or voice indicating that a person in a state satisfying the reporting condition has been detected. The reporting unit 104 may report that a person in a state satisfying the reporting condition has been detected by turning on a warning light mounted on the asphalt finisher 100. In this manner, a person at the work site can immediately recognize that there is a person in a dangerous state in the periphery of the asphalt finisher 100.

The display control unit 105 performs control to display the detection information acquired by the acquisition unit 101 on the display unit 52. In the present embodiment, the display control unit 105 displays information regarding the state of the person determined by the state determination unit 103 together with the detection information acquired by the acquisition unit 101. The display control unit 105 may display only the state of the person who is determined to satisfy the reporting condition by the reporting unit 104. In this case, the display control unit 105 may cause the display unit 52 to display a warning indicating that there is a person who is determined to satisfy the reporting condition by the reporting unit 104. In this manner, the driver of the asphalt finisher 100 can immediately recognize that there is a person in a dangerous state in the periphery of the asphalt finisher 100.

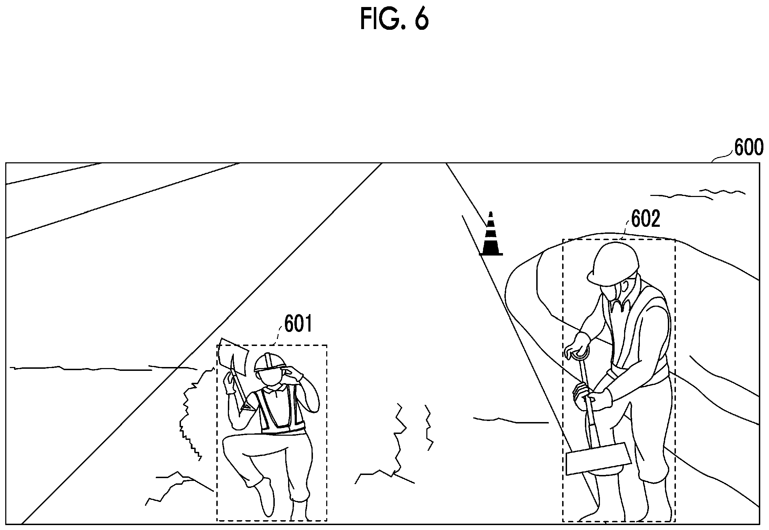

Fig. 6 is a diagram showing an example of detection information displayed on a display unit of the asphalt finisher according to the embodiment. The example shown in Fig. 6 is image information in which persons 601 and 602 who are determined to satisfy the reporting condition by the reporting unit 104 to satisfy the alarm condition are shown in image information 600 captured by the front camera 51F of the asphalt finisher 100. As shown in Fig. 6, the person 601 captured in the image information 600 is a person who is lying on the road surface and is determined to be in a state of not standing upright or having fallen down. In addition, the person 602 captured in the image information 600 is a person who is determined to be in a state where the line of sight is not directed toward the asphalt finisher 100.

The communication control unit 106 uses the communication device 53 to perform control to transmit and receive information to and from an external device. In the present embodiment, the communication control unit 106 transmits and receives information to and from the communication terminal 200 or the remote management device 300.

For example, the communication control unit 106 transmits the detection information acquired by the acquisition unit 101 to the communication terminal 200 or the remote management device 300. In the present embodiment, the communication control unit 106 transmits information regarding the state of the person determined by the state determination unit 103 together with the detection information acquired by the acquisition unit 101, to the communication terminal 200 or the remote management device 300. The communication terminal 200 or the remote management device 300 that has received the detection information and the determination result displays the detection information indicating the state of the person on the display unit. In this manner, the user of the communication terminal 200 can recognize that there is a person in a dangerous state in the periphery of the asphalt finisher 100 at the work site. In addition, the user of the remote management device 300 can recognize from a remote location that there is a person in a dangerous state in the periphery of the asphalt finisher 100.

The movement control unit 107 outputs a control command to control the operation of the tractor 1, to the drive system controller 54. In the present embodiment, the movement control unit 107 outputs, to the drive system controller 54, a control command to stop the traveling of the tractor 1 (hereinafter, referred to as a tractor stop command) in a case where the determination result of the state determination unit 103 satisfies a predetermined stop condition (hereinafter, referred to as a tractor stop condition). In this manner, the asphalt finisher 100 can perform control to stop the traveling of the asphalt finisher 100 in a case where the state of a person who is present within the application range of the paving material satisfies the tractor stop condition.

The tractor stop condition may be the same as or different from the reporting condition. In the present embodiment, the tractor stop condition is that a person (for example, a person who has fallen down) in a dangerous state is detected within a predetermined distance in the traveling direction of the asphalt finisher 100. In this manner, when there is a person who may be run over by the asphalt finisher 100, the traveling of the asphalt finisher 100 can be stopped.

The screw control unit 108 outputs a control command to control the operation of the screw SC, to the screw control device 55. In the present embodiment, the screw control unit 108 outputs, to the screw control device 55, a control command to stop the rotation of the screw SC (hereinafter, referred to as a screw stop command) in a case where the determination result of the state determination unit 103 satisfies a predetermined stop condition (hereinafter, referred to as a screw stop condition). In this manner, the asphalt finisher 100 can perform control to stop the rotation of the screw SC in a case where the state of a person who is present within the application range of the paving material satisfies the screw stop condition.

The screw stop condition may be the same as or different from the reporting condition. In the present embodiment, the screw stop condition is that a person (for example, a person who has fallen down) in a dangerous state is detected within a predetermined distance in front of the operating range of the screw SC. In this manner, when there is a person who may be caught in the screw SC, the rotation of the screw SC can be stopped.

### <<Remote Management Function>>>

In the remote management device 300, the user who remotely manages the work site may perform an operation of stopping the asphalt finisher 100. In the present embodiment, the operation of stopping the asphalt finisher 100 includes an operation of stopping the traveling of the tractor 1 or an operation of stopping the rotation of the screw SC.

When the user performs the operation of stopping the traveling of the tractor 1, the remote management device 300 transmits a control signal for stopping the traveling of the tractor 1 to the asphalt finisher 100. When the communication control unit 106 receives the control signal from the remote management device 300, the movement control unit 107 outputs the tractor stop command to the drive system controller 54.

When the user performs the operation of stopping the rotation of the screw SC, the remote management device 300 transmits a control signal for stopping the rotation of the screw SC to the asphalt finisher 100. When the communication control unit 106 receives the control signal from the remote management device 300, the screw control unit 108 outputs the screw stop command to the screw control device 55.

### <<Log Checking Function>>

The communication control unit 106 may transmit the log information stored in the log information storage unit 48a to the remote management device 300. The remote management device 300 stores the log information received from the asphalt finisher 100 and displays the past detection information and determination result on the display unit according to the operation of the user who remotely manages the work site. In this manner, the user of the remote management device 300 can check the past situation in the periphery of the asphalt finisher 100.

The remote management device 300 displays a list of the log information received from the asphalt finisher 100. The remote management device 300 may reproduce the detection information indicating the state of the person over time. In this case, the remote management device 300 emphasizes the log information in which it has been determined that there is a person who is determined to satisfy the reporting condition. The emphasis display may be in any form as long as it is easy for the user to visually recognize. For example, a predetermined icon may be displayed in a time zone when a person who satisfies the reporting condition is imaged. The remote management device 300 may reproduce the detection information from the time designated by the user who remotely manages the work site. In this manner, the user of the remote management device 300 can easily check the situation in the periphery of the asphalt finisher 100 in the time zone when there is a person who is determined to satisfy the reporting condition.

### <Detection Process>

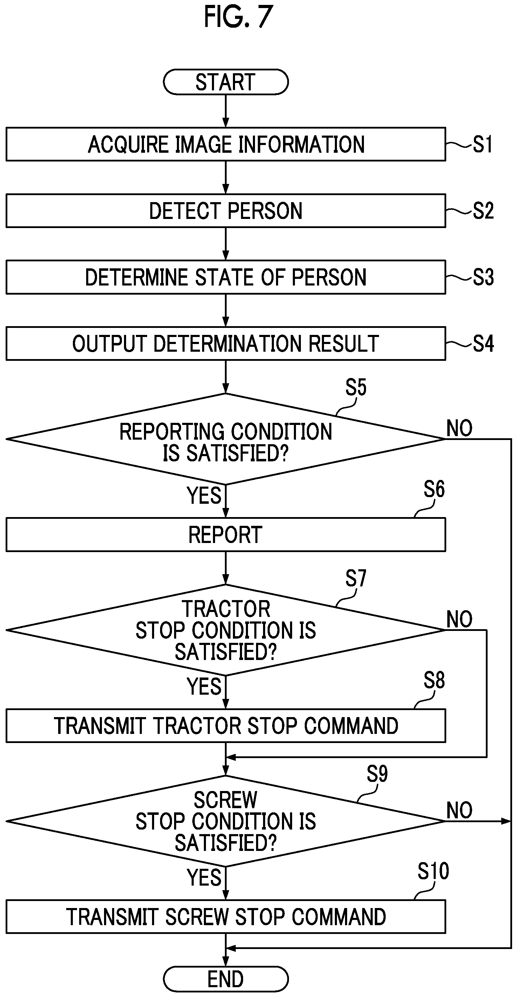

A detection process executed by the asphalt finisher 100 will be described with reference to Fig. 7. Fig. 7 is a flowchart showing an example of a detection process executed by the asphalt finisher according to the embodiment.

The detection process is an example of a process in which the asphalt finisher 100 detects the application range of the paving material and outputs information regarding the state of the detected person. The detection process is executed at predetermined time intervals. The detection process may be executed every time the imaging device 51 captures image information.

In step S1, the imaging device 51 detects the periphery of the asphalt finisher 100. Next, the imaging device 51 outputs the detection information to the controller 50. The detection information includes the result of detecting the application range of the paving material.

The acquisition unit 101 of the controller 50 acquires the detection information from the imaging device 51. Then, the acquisition unit 101 sends the acquired detection information to the person detection unit 102.

In step S2, the person detection unit 102 of the controller 50 receives the detection information from the acquisition unit 101. Next, the person detection unit 102 detects a person who is present within the application range of the paving material based on the received detection information. Then, the person detection unit 102 sends the detection result indicating the range in which a person is detected to the state determination unit 103.

In step S3, the state determination unit 103 of the controller 50 receives the detection result from the person detection unit 102. Next, the state determination unit 103 determines the state of the person detected by the person detection unit 102 based on the received detection result. The state determination unit 103 stores the log information including the detection information and the determination result in the log information storage unit 48a.

Then, the state determination unit 103 sends the detection information and the determination result to the display control unit 105 and the communication control unit 106. In addition, the state determination unit 103 sends the determination result to the reporting unit 104, the movement control unit 107, and the screw control unit 108.

In step S4, the display control unit 105 of the controller 50 receives the detection information and the determination result from the state determination unit 103. Next, the display control unit 105 displays the detection information indicating the state of the person on the display unit 52.

In addition, the communication control unit 106 of the controller 50 receives the detection information and the determination result from the state determination unit 103. Next, the communication control unit 106 transmits the detection information and the determination result to the communication terminal 200 or the remote management device 300. The communication terminal 200 or the remote management device 300 displays the detection information indicating the state of the person on the display unit based on the received detection information and determination result.

In step S5, the reporting unit 104 of the controller 50 receives the determination result from the state determination unit 103. Next, the reporting unit 104 determines whether a person in a state satisfying the reporting condition has been detected, based on the received determination result. In a case where a person in a state satisfying the reporting condition has been detected (YES), the reporting unit 104 proceeds to step S6. On the other hand, in a case where a person in a state satisfying the reporting condition has not been detected (NO), the reporting unit 104 skips step S6 and proceeds to step S7.

In step S6, the reporting unit 104 of the controller 50 outputs a signal for reporting that a person in a state satisfying the reporting condition has been detected. For example, the reporting unit 104 outputs, to the display unit 52, a signal for instructing the display unit 52 to display a warning indicating that there is a person who is determined to satisfy the reporting condition. In addition, for example, the reporting unit 104 outputs, to the voice output device 56, a signal for instructing the voice output device 56 to emit a sound or voice indicating that a person in a state satisfying the reporting condition has been detected.

In step S7, the movement control unit 107 of the controller 50 receives the determination result from the state determination unit 103. Next, the movement control unit 107 determines whether the tractor stop condition is satisfied based on the received determination result. In a case where the tractor stop condition is satisfied (YES), the movement control unit 107 proceeds to step S8. On the other hand, in a case where the tractor stop condition is not satisfied (NO), the movement control unit 107 skips step S8 and proceeds to step S9.

In step S8, the movement control unit 107 of the controller 50 outputs the tractor stop command to the drive system controller 54. The drive system controller 54 stops the traveling of the tractor 1 in accordance with the tractor stop command.

In step S9, the screw control unit 108 of the controller 50 receives the determination result from the state determination unit 103. Next, the screw control unit 108 determines whether the screw stop condition is satisfied based on the received determination result. In a case where the screw stop condition is satisfied (YES), the screw control unit 108 proceeds to Step S10. On the other hand, in a case where the screw stop condition is not satisfied (NO), the screw control unit 108 ends the detection process.

In step S10, the screw control unit 108 of the controller 50 outputs the screw stop command to the screw control device 55. The screw control device 55 stops the rotation of the screw SC in accordance with the screw stop command.

### <Effect of Embodiment>

The asphalt finisher 100 in the present embodiment includes the tractor 1, the hopper 2 that is provided on the front side of the tractor 1 and that receives the paving material, the conveyor CV that feeds the paving material in the hopper 2 to the rear side of the tractor 1, the screw SC that spreads the paving material, which is transported by the conveyor CV and is sprinkled on the road surface, in the vehicle width direction on the rear side of the tractor 1, the screed 3 that levels the paving material spread by the screw SC on the rear side of the screw SC, and the imaging device 51 that detects the application range of the paving material. The asphalt finisher 100 performs a process of outputting the information regarding the state of the person detected by the imaging device 51. In one aspect, according to the present embodiment, the situation of the application range of the paving material can be easily known. In particular, in the application range of the paving material, the operation of the asphalt finisher 100 may cause danger to the workers in the periphery of the asphalt finisher 100, so that it is possible to prevent an accident such as the worker coming into contact with the asphalt finisher 100.

The asphalt finisher 100 detects a person who is present in any one or more of an area within a predetermined distance in the traveling direction of the asphalt finisher 100, an area in front of the operating range of the screw SC, an area within a predetermined distance on the side of the screed 3, and an area within a predetermined distance on the side of the hopper 2. For example, in a case where a worker is present in the traveling direction of the asphalt finisher 100, the worker may come into contact with the asphalt finisher 100. In addition, for example, in a case where a worker is present in front of the operating range of the screw SC, the worker may be caught in the screw SC. Further, for example, in a case where a worker is present on the side of the screed 3, the screed 3 may come into contact with the worker when the screed 3 is extended. In addition, for example, when a worker is present on the side of the hopper 2, the hopper 2 may come into contact with the worker when the hopper 2 is opened. Therefore, according to the present embodiment, it is possible to easily know that a person is in a position where danger is likely to occur.

The state of the person includes any one or more of a person who is not standing upright, a person who has fallen down, and a person whose line of sight is not directed toward the asphalt finisher 100. When a person in a position where danger is likely to occur is in a posture that prevents the person from immediately taking evacuation action, the likelihood of an abnormality such as contact increases. Therefore, according to the present embodiment, it is possible to easily know that a person in a state where it is difficult to avoid danger is in a position where danger is likely to occur.

The asphalt finisher 100 detects the person by using a model that is trained through machine learning using, as supervised data, a plurality of images showing the person at different positions or the person in different states within the application range of the paving material. With machine learning, it may be possible to detect a person in a state that has similar features even though the state differs from a predefined state. According to the present embodiment, a person in a dangerous state can be accurately detected.

The asphalt finisher 100 reports that a person in a state satisfying the reporting condition has been detected. According to the present embodiment, a person at the work site can immediately know that there is a person in a dangerous state within the application range of the paving material. When a person at a work site recognizes a person in a dangerous state, an accident can be avoided by taking cautionary or rescue actions for the person.

The asphalt finisher 100 displays the information regarding the state of the person on the display unit 52 of the asphalt finisher 100. According to the present embodiment, the driver of the asphalt finisher 100 can immediately know that there is a person in a dangerous state within the application range of the paving material. When the driver of the asphalt finisher 100 recognizes a person in a dangerous state, an accident can be avoided by stopping the operation of the asphalt finisher 100.

The asphalt finisher 100 transmits the information regarding the state of the person to the communication terminal 200 or the remote management device 300. According to the present embodiment, the user of the communication terminal 200 or the remote management device 300 can know that there is a person in a dangerous state within the application range of the paving material, either at the work site or at a remote location. When the user of the communication terminal 200 recognizes a person in a dangerous state, an accident can be avoided by taking cautionary or rescue actions for the person. When the user of the remote management device 300 recognizes a person in a dangerous state, an accident can be avoided by stopping the operation of the asphalt finisher 100 from a remote location.

The asphalt finisher 100 outputs a control command to stop the traveling of the tractor 1 or the rotation of the screw SC. According to the present embodiment, in a case where there is a person in a dangerous state within the application range of the paving material, the traveling of the tractor 1 or the rotation of the screw SC can be stopped. For example, in a case where there is a person in a dangerous state in the traveling direction of the asphalt finisher 100, an accident in which the person comes into contact with the asphalt finisher 100 can be avoided by stopping the traveling of the tractor 1. In addition, for example, in a case where there is a person in a dangerous state in front of the operating range of the screw SC, an accident in which the person is caught in the screw SC can be avoided by stopping the rotation of the screw SC.

Although the embodiment of the asphalt finisher according to the present invention has been described above, the present invention is not limited to the embodiment described above. Various changes, modifications, substitutions, additions, deletions, and combinations can be made within the scopes stated in the claims. These also naturally belong to the technical scope of the present invention.

### Brief Description of the Reference Symbols

- 1:: tractor
- 2:: hopper
- 3:: screed
- 48:: auxiliary storage device
- 50:: controller
- 51:: imaging device
- 52:: display unit
- 53:: communication device
- 54:: drive system controller
- 55:: screw control device
- 56:: voice output device
- 100:: asphalt finisher
- 101:: acquisition unit
- 102:: person detection unit
- 103:: state determination unit
- 104:: reporting unit
- 105:: display control unit
- 106:: communication control unit
- 107:: movement control unit
- 108:: screw control unit
- 200:: communication terminal
- 300:: remote management device
- CV:: conveyor
- SC:: screw
- SYS:: road surface paving system

## Claims

1. An asphalt finisher (100) comprising:
a tractor (1);
a hopper (2) that is installed on a front side of the tractor (1) and receives a paving material;
a conveyor (CV) that transports the paving material in the hopper (2) to a rear side of the tractor (1);
a screw (SC) that spreads the paving material, which is transported by the conveyor (CV) and is sprinkled on a road surface, in a vehicle width direction on the rear side of the tractor (1);
a screed (3) that levels the paving material spread by the screw (SC) on a rear side of the screw (SC); and
a detection unit that detects an application range of the paving material,
wherein the asphalt finisher (100) is configured to perform a process of outputting information regarding a state of a person detected by the detection unit.

2. The asphalt finisher (100) according to claim 1,
wherein the detection unit is configured to detect the person who is present in any one or more of an area within a predetermined distance in a traveling direction of the asphalt finisher (100), an area in front of an operating range of the screw (SC), an area within a predetermined distance on a side of the screed (3), and an area within a predetermined distance on a side of the hopper (2).

3. The asphalt finisher (100) according to claim 2,
wherein the detection unit is configured to detect any one or more of a person who is not standing upright, a person who has fallen down, and a person whose line of sight is not directed toward the asphalt finisher (100).

4. The asphalt finisher (100) according to claim 3,
wherein the asphalt finisher (100) is configured to detect the person by using a model that is trained through machine learning using, as supervised data, a plurality of images showing the person at different positions or the person in different states within the application range of the paving material.

5. The asphalt finisher (100) according to any one of claims 1 to 4,
wherein the asphalt finisher (100) is configured to output a signal for reporting that the person whose state detected by the detection unit satisfies a predetermined condition has been detected.

6. The asphalt finisher (100) according to any one of claims 1 to 4,
wherein the asphalt finisher (100) is configured to display the information relating to the state on a display unit (52) of the asphalt finisher (100).

7. The asphalt finisher (100) according to any one of claims 1 to 4,
wherein the asphalt finisher (100) is configured to transmit the information relating to the state to an external device.

8. The asphalt finisher (100) according to any one of claims 1 to 4,
wherein the asphalt finisher (100) is configured to output a control command for stopping traveling of the tractor (1) or rotation of the screw (SC).
